# EUROPEAN PATENT APPLICATION

(11) **EP 1 505 419 A2**
(43) Date of publication of application: **09.02.2005**
(21) Application number: 04009858.4
(22) Date of filing: 26.04.2004
(51) Int. Cl.: G02B 6/35

(54) **Method and system for maintaining active alignment in an optical switch using dedicated directing elements**

(30) Priority: 07.08.2003 US 638140
(71) Applicant: Agilent Technologies Inc, Palo Alto, CA 94306-2024 (US)
(72) Inventor: Schroeder, Dale W., Scotts Valley CA 95066 (US); Lacey, Jonathan P., Mountain View CA 94941 (US)
(74) Representative: Liesegang, Roland, Dr.-Ing.

(57) **Abstract**

An input optical fiber (202), an output optical fiber (204), a pair of directing elements (206, 208), and a detector (128) form an alignment channel in an optical switch (200). The optical switch (200) includes one or more alignment channels. The input optical fiber (202) and the output optical fiber (204) in each alignment channel are dedicated to propagating an alignment beam of light (118) through the optical switch (200). The dedicated directing elements (206, 208) direct the alignment beam of light (118) to the dedicated output optical fiber (204) from the dedicated input optical fiber (202). The detector (128) receives the alignment beam of light (118) from the dedicated output optical fiber (204) and generates a signal representative of the alignment beam of light (118). The signal is transmitted to a controller (130), which generates a correction signal for an array of directing elements. The correction signal causes all of the directing elements in the array to be adjusted in order to minimize losses in optical signal power.

## Description

### Technical Field:

The invention relates generally to optical communications, and more particularly to optical switches. Still more particularly, the invention relates to a method and system for maintaining active alignment in an optical switch using dedicated representative directing elements.

### Background:

Recent and ongoing innovations in fiber optic technology have resulted in the increased use of optical fibers in a number of applications, including optical communications. This increased use has led to a need for efficient peripheral devices that assist in the transmission of data through the optical fibers. One such peripheral device is an optical switch. An optical switch operates to selectively couple one optical fiber to a second optical fiber such that the coupled optical fibers are in communication with each other.

Two optical fibers in an optical switch can be coupled together with micro-machined tilting mirrors, or microelectromechanical system (MEMS) tilting mirrors, to direct a beam of light from an input optical fiber to an output optical fiber. The alignment of the tilting mirrors is critical to the performance of an optical switch. Each tilting mirror must be precisely aligned to receive a beam of light from, or transmit a beam of light into, a corresponding optical fiber. When one or more tilting mirrors are out of alignment, less light enters an output optical fiber resulting in losses in optical signal power.

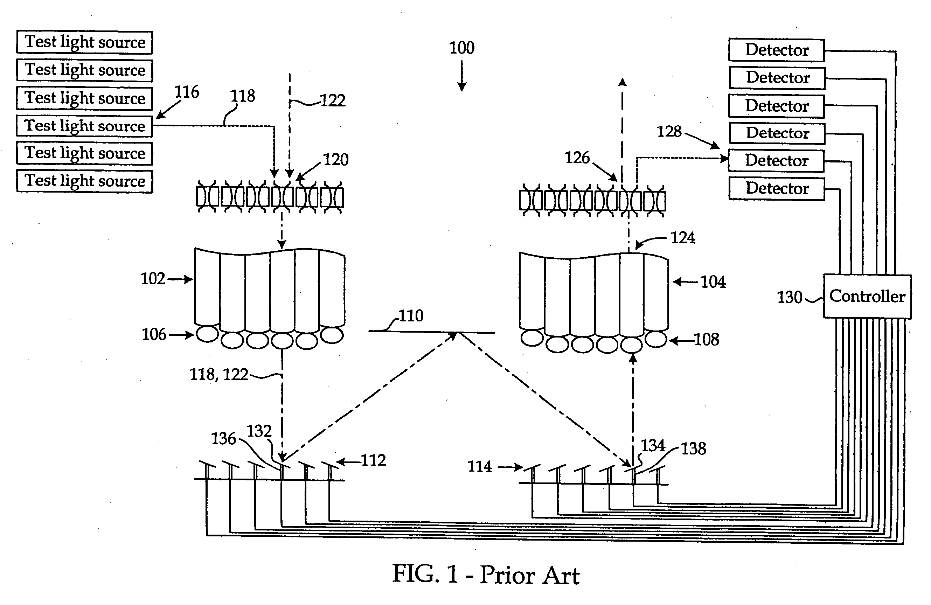

**FIG. 1** illustrates a simplified diagrammatic side view of an alignment system in an optical switch according to the prior art. Alignment system 100 includes a collection of input optical fibers 102, output optical fibers 104, input lenses 106, and output lenses 108. A fixed mirror 110 is positioned between and opposing two arrays of micro-machined tilting mirrors 112, 114. The alignment of optical switch 100 is maintained by transmitting an alignment beam of light 118 from a test light source 116 to a directional optical coupler 120. The coupler 120 injects the alignment beam 118 into a data information beam of light 122 propagating through optical switch 100. The two beams of light 118, 122 propagate through the optical switch and, upon exiting an output fiber 124, are received by a directional coupler 126.

Typically, the alignment beam of light 118 has a wavelength band different from that of the data information beam of light 122 in order to render the alignment beam 118 discernible from the data information beam 122. Accordingly, the directional coupler 126 directs the alignment beam of light 118 onto a detector 128, which generates a signal representative of the alignment beam of light 118. The detector 128 transmits the signal to a controller 130, which determines the accuracy of the alignment for the pair of tilting mirrors 132, 134. The controller 130 generates compensation signals that are fed back to actuators 136, 138 connected to tilting mirrors 132, 134 respectively, to cause actuators 136, 138 to adjust the tilt of the mirrors 132, 134 to minimize losses in signal power.

The alignment system of FIG. 1 requires a large total number of test light sources, directional optical couplers, and detectors to align the optical switch. A coupler is needed for each input and each output optical fiber in the switch, a detector is needed for each output fiber, and a test light source is needed for each input fiber. The alignment system of **FIG. 1** also requires a considerable amount of time to align the switch, since individual pairs of tilting mirrors are adjusted independently.

### Summary:

In accordance with the invention, a method and system for maintaining active alignment in an optical switch using dedicated representative directing elements is provided. An input optical fiber, an output optical fiber, a pair of directing elements, and a detector form an alignment channel in an optical switch. The optical switch includes one or more alignment channels. The input optical fiber and the output optical fiber in each alignment channel are dedicated to propagating an alignment beam of light through the optical switch. The pair of dedicated directing elements directs the alignment beam of light into the dedicated output optical fiber from the dedicated input optical fiber. The detector receives the alignment beam of light from the dedicated output optical fiber and generates a signal representative of the alignment beam of light. The signal is transmitted to a controller, which generates a correction signal for an array of directing elements. The correction signal causes all of the directing elements in the array to be adjusted in order to minimize losses in optical signal power.

### Brief Description of the Drawings:

The invention will best be understood by reference to the following detailed description of embodiments in accordance with the invention when read in conjunction with the accompanying drawings, wherein:
**FIG. 1** illustrates a simplified diagrammatic side view of a first alignment system in an optical switch according to the prior art;
**FIG. 2** illustrates a simplified diagrammatic side view of an alignment system in a first embodiment in accordance with the invention;
**FIG. 3** depicts a simplified diagrammatic side view of an alignment system in a second embodiment in accordance with the invention;
**FIG. 4** illustrates a simplified diagrammatic side view of an alignment system in a third embodiment in accordance with the invention;
**FIG. 5** depicts a simplified cross-sectional view of a first embodiment of a lens, support device, and fiber construction that may be implemented in the optical switch of **FIG. 4;**
**FIG. 6** illustrates a simplified perspective view of a second embodiment of a lens, support device, and fiber construction that may be implemented in the optical switch of **FIG. 4;**
**FIG. 7** is a simplified diagrammatic top view of an array of tilting mirrors illustrating four dedicated representative mirrors in accordance with the invention;
**FIG. 8** is a simplified diagrammatic top view of an array of tilting mirrors depicting three dedicated representative mirrors in accordance with the invention; and
**FIG. 9** is a simplified diagrammatic top view of an array of tilting mirrors depicting three dedicated representative mirrors in accordance with the invention.

### Detailed Description:

The invention relates to a method and system for maintaining active alignment in an optical switch using dedicated representative directing elements. The following description is presented to enable one skilled in the art to make and use the invention, and is provided in the context of a patent application and its requirements. Various modifications to the disclosed embodiments will be readily apparent to those skilled in the art, and the generic principles herein may be applied to other embodiments. Thus, the invention is not intended to be limited to the embodiments shown, but is to be accorded the widest scope consistent with the appended claims and with the principles and features described herein.

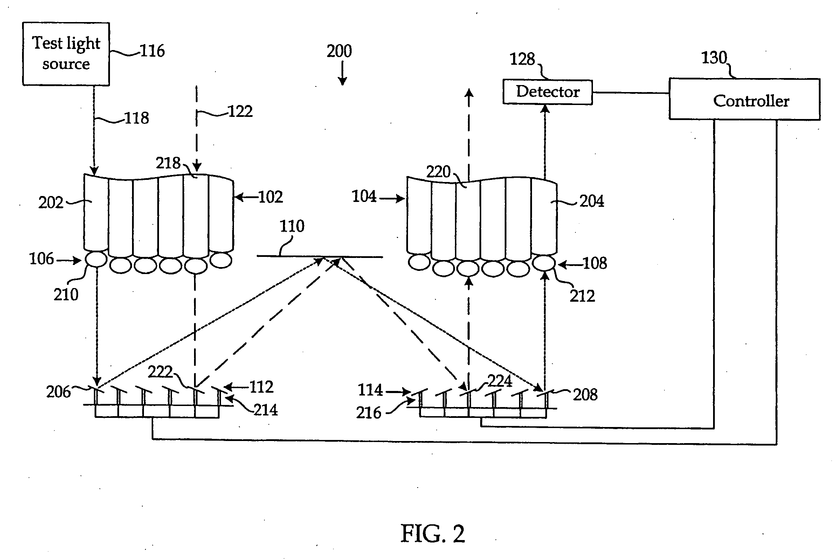

With reference now to the figures and in particular with reference to FIG. 2, there is shown a simplified diagrammatic side view of an alignment system in a first embodiment in accordance with the invention. Optical switch 200 includes a collection of input optical fibers 102, output optical fibers 104, input lenses 106, and output lenses 108. A fixed mirror 110 is positioned between and opposing two arrays of micro-machined tilting mirrors 112, 114. The input optical fibers 102 and the output optical fibers 104 are held in a conventional alignment device or coupling mechanism (not shown).

An input optical fiber 202, an output optical fiber 204, and a pair of tilting mirrors 206, 208 are dedicated to propagating an alignment beam of light 118 through optical switch 200. The remaining optical fibers and tilting mirrors propagate data information beams of light through the switch 200. The dedicated input optical fiber 202, dedicated output optical fiber 204, and pair of dedicated tilting mirrors 206, 208 maintain the alignment of the optical switch 200 by propagating the alignment beam of light 118 through the optical switch 200 continuously or at intermittent time periods.

A test light source 116 generates and transmits the alignment beam of light 118 into the dedicated input optical fiber 202. A lens 210 focuses the alignment beam of light 118 onto the dedicated tilting mirror 206 in array 112. The dedicated tilting mirror 206 reflects the alignment beam of light 118 onto a particular point on the fixed mirror 110, which in turn reflects the alignment beam 118 onto the dedicated tilting mirror 208 in array 114. The dedicated tilting mirror 208 reflects the alignment beam 118 into a lens 212, which focuses the alignment beam 118 into the dedicated output fiber 204.

An optical-to-electrical detector 128, such as a photodiode, receives the alignment beam of light 118 from the dedicated output fiber 204 and generates a signal representative of the alignment beam 118. A controller 130 receives the signal and determines the accuracy of the alignment for the pair of tilting mirrors 206, 208. If the dedicated tilting mirrors 206, 208 are out of alignment, the controller 130 generates a correction signal for one or both arrays of tilting mirrors 112, 114.

The tilting mirrors in array 112 are typically fabricated in batches on the same wafer, such as a silicon wafer. As a result, the tilting mirrors in array 112 have similar properties and responses to operating conditions, such as vibration and thermal conditions. Therefore, the correction signal represents an adjustment in the tilt for all of the tilting mirrors in array 112. The correction signal is transmitted to all of the actuators 214 connected to the tilting mirrors in array 112, and causes each actuator to adjust the tilt of its corresponding tilting mirror to minimize losses in optical signal power.

Similarly, the controller 130 transmits another correction signal to all of the actuators 216 connected to the tilting mirrors in array 114. The correction signal causes each actuator to adjust the tilt of its corresponding tilting mirror to minimize losses in optical signal power. Actuators 214, 216 may be implemented, for example, as thermal actuators, piezoelectric actuators, or MEMS electrostatic actuators in this first embodiment in accordance with the invention.

A data information beam of light 122 utilizes non-dedicated optical fibers 218, 220 and tilting mirrors 222, 224 to propagate through optical switch 200. Although only one alignment beam of light 118 and one data information beam of light 122 are illustrated in FIG. 2, there is in actuality a plurality of beams of light propagating through the switch 200. Because the alignment beam of light utilizes dedicated components in optical switch 200, the alignment beam of light 118 does not require a wavelength band different from that of the data information beam of light 122. Embodiments in accordance with the invention eliminate the need for directional optical couplers and reduce the number of required test light sources and detectors.

Embodiments in accordance with the invention, however, are not limited in application to one dedicated input fiber, one dedicated output fiber, and one pair of dedicated tilting mirrors. Any desired number of dedicated alignment components can be utilized with the invention. The number of dedicated alignment components in an optical switch depends on a variety of factors, including the number of tilting mirrors in an array, how closely the number of dedicated tilting mirrors represents the array, and the type of deviations in a system. For example, if an array rotates around an axis, then more than one dedicated tilting mirror may be needed to generate a correction signal representative of the entire array. Alternatively, if an array pivots in one direction (e.g. the y direction), a single dedicated mirror may be used depending on the number of tilting mirrors in the array.

Embodiments in accordance with the invention are also not limited to the use of input and output optical fibers. Any desired optical components that propagate light through an optical switch may be implemented in accordance with the invention. For example, waveguides formed in a substrate may be used to propagate beams of light through an optical switch.

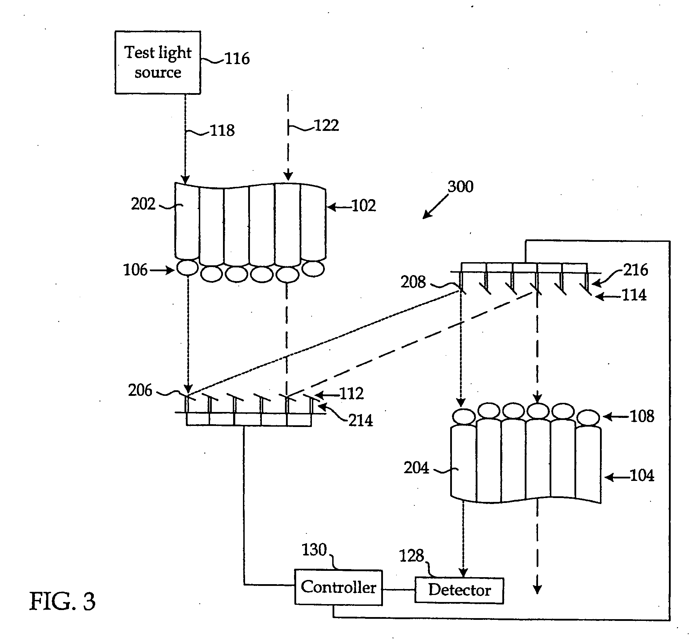

**FIG. 3** depicts a simplified diagrammatic side view of an alignment system in a second embodiment in accordance with the invention. Optical switch 300 includes a collection of input optical fibers 102, output optical fibers 104, input lenses 106, and output lenses 108, and two opposing arrays of micro-machined tilting mirrors 112, 114. The input optical fibers 102 and the output optical fibers 104 are held in a conventional alignment device or coupling mechanism (not shown).

The **FIG. 3** embodiment is similar to the **FIG. 2** embodiment in that an input optical fiber 202, output optical fiber 204, and pair of tilting mirrors 206, 208 are dedicated to propagating an alignment beam of light 118 through optical switch 300. A detector 128 receives the alignment beam of light 118 after the alignment beam 118 has propagated through optical switch 300. The detector generates a signal representative of the alignment beam 118 and transmits the signal to a controller 130. The controller 130 generates a correction signal for one or both arrays of tilting mirrors 112, 114 when the dedicated tilting mirrors 206, 208 are out of alignment.

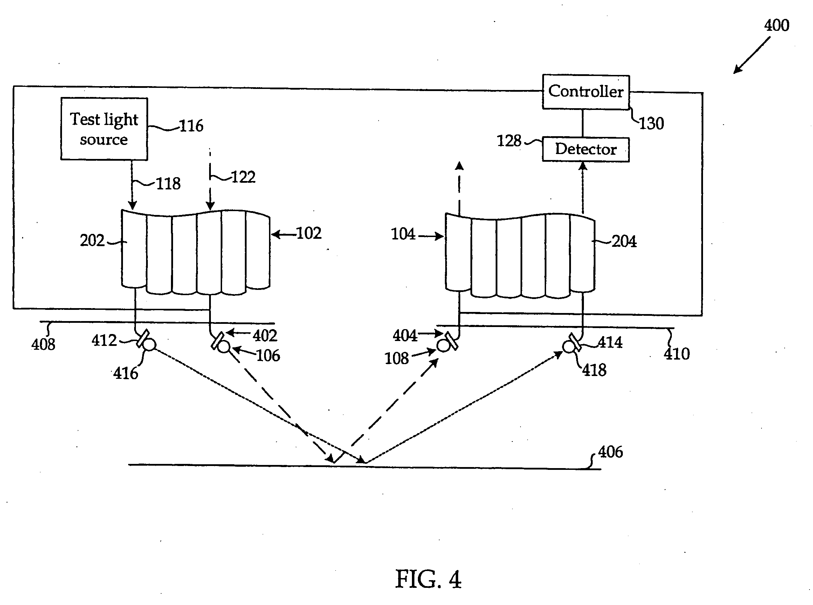

Referring to **FIG. 4,** a simplified diagrammatic side view of an alignment system in a third embodiment in accordance with the invention is shown. Optical switch 400 includes a collection of input optical fibers 102, output optical fibers 104, input lenses 106, output lenses 108, input support devices 402, output support devices 404, and a mirror 406. The input fibers 102 are bonded to, or supported by, a first substrate layer 408, and the output fibers 104 are bonded to, or supported by, a second substrate layer 410. The input and output fibers 102, 104 may be unidirectional or bidirectional optical fibers, and are constructed with any known flexible material, such as for example, RC 1550 specialty fiber by Corning® or BIF-RC-1550-L2 bend insensitive fibers by StockerYale™. The flexible material allows one or more bends to be formed in each fiber.

The support devices 402, 404 include positioning means that create bends in the flexible optical fibers. In this embodiment in accordance with the invention, support devices 402, 404 may be fabricated to include one or more microelectromechanical (MEMS) devices, or may be fabricated as a support plate connected to one or more MEMS devices. Each MEMS device includes a pair of actuators, such as, for example, electrostatic actuators, thermal actuators, piezoelectric actuators, or electrostatic micromotors. The support devices 402, 404 are shown separately from the first and second substrates 408, 410 in **FIG. 4** in order to better illustrate the support devices 402, 404. In practice, support devices 402 and 404 are typically formed or constructed within substrates 408 and 410, respectively, using known MEMS fabrication techniques.

Each optical fiber is connected to a support device in the **FIG. 4** embodiment. An input fiber is optically coupled with an output fiber by selectively actuating or rotating one or both support devices to create a bend in one or both optical fibers and to place the lenses in the best position for transmitting or receiving a beam of light. A bend in a fiber is created by applying the forces generated by one or more actuators against a band of material surrounding a portion of the exterior surface of a fiber, causing the fiber to flex toward a desired point. In another embodiment in accordance with the invention, a bend in a fiber is created by applying the forces generated by one or more actuators to a support plate connected to the fiber, causing the support plate to rotate, or pivot, to a desired position.

Alignment of optical switch 400 is maintained by propagating an alignment beam of light 118 through the optical switch 400 continuously or at intermittent time periods. A test light source 116 generates the alignment beam of light 118 and transmits the alignment beam 118 into a dedicated input optical fiber 202. A dedicated input support device 412 creates a bend in the dedicated input fiber 202 to direct the alignment beam of light 118 onto a desired spot on mirror 406. The mirror 406 reflects the alignment beam 118 into an output lens 418, which focuses the alignment beam 118 into the dedicated output fiber 204. The dedicated output support device 414 creates a bend in the dedicated output optical fiber 204 to maximize the amount of light received by the dedicated output optical fiber 204.

A detector 128 receives the alignment beam of light 118 from the dedicated output fiber 204 and generates a signal representative of the alignment beam of light 118. A controller 130 receives the signal determines the accuracy of the alignment for the pair of support devices 412, 414. The controller 130 may generate a correction signal for all of the input support devices 402 when the dedicated support devices 412, 414 are out of alignment. The correction signal causes all of the input support devices to adjust the bend in their corresponding input optical fibers to maximize the amount of light entering each output optical fiber. Controller 130 may also generate another correction signal for all of the output support devices 404 to cause the output support devices to adjust the bend in their corresponding output optical fibers to maximize the amount of light entering each output optical fiber.

Embodiments in accordance with the invention are not limited to the use of one dedicated input fiber, one dedicated output fiber, and one pair of dedicated support devices. Any desired number of dedicated alignment components can be utilized with the embodiments. The number of dedicated alignment components in an optical switch depends on a variety of factors, including the number of optical fibers in the optical switch, how closely the number of dedicated support devices represents an array of support devices, and the type of deviations in a system.

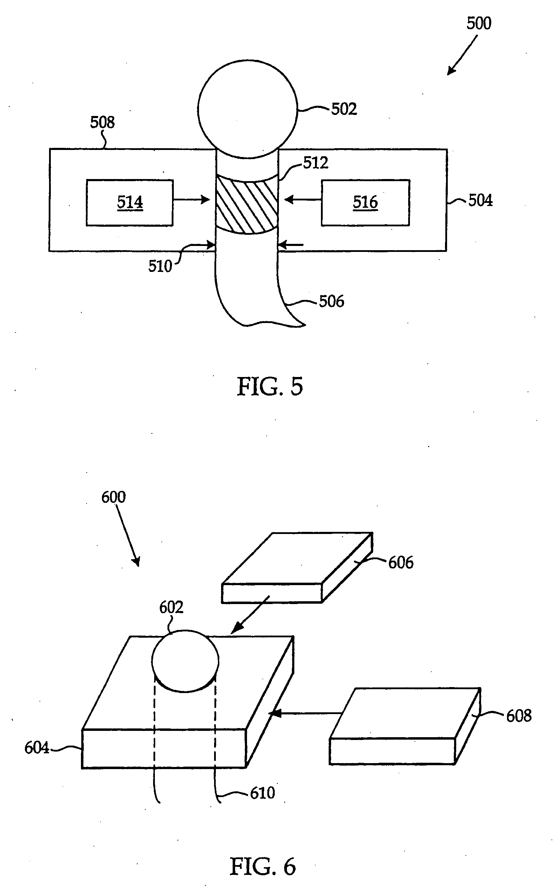

**FIG. 5** depicts a simplified side view of a first embodiment of a lens, support device, and fiber construction that may be implemented in the optical switch of **FIG. 4**. Construction 500 includes a lens 502, a support device 504, and an optical fiber 506. Lens 502 is bonded to, or in contact with, a support surface 508 of support device 504 in this embodiment in accordance with the invention. Lens 502 is also aligned over, and bonded to, a terminating end of optical fiber 506. Optical fiber 506 extends through an aperture 510 formed in support device 504. Aperture 510 may be created using any known fabrication technique. For example, aperture 510 may be formed in support device 504 by micro-machining the substrate or by etching the substrate using any suitable etch technique.

A band of material 512 surrounds a portion of the optical fiber 506. A first actuator 514 generates a force along a first axis that may be applied to the band of material 512. A second actuator 516 generates a force along a second, perpendicular axis that may also be applied to the band of material 512. The two actuators 514, 516 permit three-dimensional bending of the optical fiber 506 and positioning of the lens 502. Embodiments in accordance with the invention, however, are not limited in application to the construction shown in **FIG. 5**. Any support device construction that permits a force to be applied to the exterior surface of a flexible optical fiber to bend the optical fiber towards a desired point may be utilized in other embodiments in accordance with the invention.

**FIG. 6** illustrates a simplified perspective view of a second embodiment of a lens, support device, and fiber construction that may be implemented in the optical switch of **FIG. 4**. Construction 600 includes a lens 602, support plate 604, positioning means 606, positioning means 608, and an optical fiber 610. Support plate 604, positioning means 606, and positioning means 608, form a support device in this embodiment in accordance with the invention. Positioning means 606 and 608 each include an actuator. A bend in the optical fiber 610 is created by applying the forces generated by one or both actuators against the support plate 604 connected to the fiber 610, causing the support plate 604 to rotate, or pivot, to a desired position. Rotation of the support plate 604 permits three-dimensional flexing of the fiber 610 and positioning of the lens 602. Embodiments in accordance with the invention, however, are not limited in application to the construction shown in **FIG. 6**. Any support device construction that permits a force to be applied to a support plate affixed or connected to a flexible optical fiber in order to create a bend in the fiber may be utilized in other embodiments in accordance with the invention.

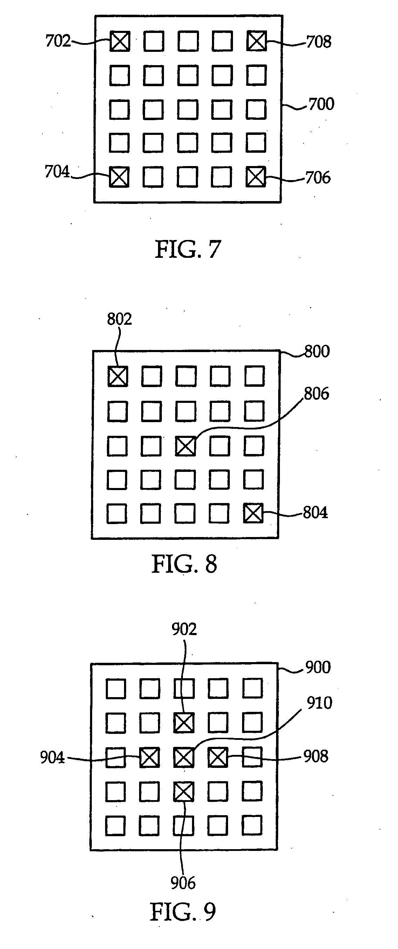

Referring to **FIG. 7**, there is shown a simplified diagrammatic top view of an array of tilting mirrors illustrating four dedicated representative mirrors in accordance with the invention. Array 700 includes both dedicated and non-dedicated tilting mirrors. The four dedicated tilting mirrors 702, 704, 706, 708 are depicted at each comer of the array 700. The dedicated tilting mirrors 702, 704, 706, 708 receive and reflect alignment beams of light. The remaining tilting mirrors receive and reflect data information beams of light.

**FIG. 8** is a simplified diagrammatic top view of an array of tilting mirrors depicting three dedicated representative mirrors in accordance with the invention. Array 800 includes both dedicated and non-dedicated tilting mirrors. Two of the dedicated tilting mirrors 802, 804 are depicted as mirrors located at opposing comers of the array 800. The third dedicated mirror 806 is illustrated as the center mirror in the array 800. The dedicated tilting mirrors 802, 804, 806 receive and reflect alignment beams of light. The remaining tilting mirrors receive and reflect data information beams of light.

Referring to **FIG. 9**, there is shown a simplified diagrammatic top view of an array of tilting mirrors illustrating five dedicated representative mirrors in accordance with the invention. Exemplary array 900 includes both dedicated and non-dedicated tilting mirrors. The five dedicated tilting mirrors 902, 904, 906, 908, 910 are used exclusively for receiving and reflecting alignment beams of light. The remaining tilting mirrors receive and reflect data information beams of light.

## Claims

1. An optical switch (200), comprising:
an alignment channel, wherein the alignment channel comprises:
an optical input (202) for receiving an alignment beam of light (118);
a first tilting mirror (206) included in a first array of tilting mirrors (112) and a second tilting mirror (208) included in a second array of tilting mirrors (114), wherein the first tilting mirror (206) is positioned to receive the alignment beam of light (118) from the optical input (202) and the second tilting mirror (208) is positioned to receive the alignment beam of light (118) from the first tilting mirror (206) and direct the alignment beam of light (118) into a corresponding optical output (204); and
a detector (128) for receiving the alignment beam of light (118) from the optical output (204) and for generating a signal representative of the alignment beam of light (118), wherein the signal representative of the alignment beam of light (118) is used to determine the alignment of the first tilting mirror (206) and the second tilting mirror (208).

2. The optical switch (200) of claim 1, further comprising a controller (130) for receiving the signal representative of the alignment beam of light (118) and for generating a first correction signal representative of a first adjustment in a tilt for all of the tilting mirrors in the first array (112), wherein the first correction signal is transmitted to an actuator connected to each tilting mirror in the first array (112) to cause each actuator to adjust the tilt of its corresponding tilting mirror.

3. The optical switch (200) of claim 2, wherein the controller (130) generates a second correction signal representative of a second adjustment in a tilt for all of the tilting mirrors in the second array (114), and wherein the second correction signal is transmitted to an actuator connected to each tilting mirror in the second array (114) to cause each actuator to adjust the tilt of its corresponding tilting mirror.

4. An optical switch(400), comprising:
an alignment channel, wherein the alignment channel comprises:
an input optical fiber (202) for receiving an alignment beam of light (118);
an output optical fiber (204);
a first support device (412) for creating a bend in the input optical fiber (202), wherein the first support device (412) is included in a first plurality of support devices (402) that create bends in corresponding optical fibers;
a second support device (414) for creating a bend in the output optical fiber (204), wherein the second support device (414) is included in a second plurality of support devices (404) that create bends in corresponding optical fibers, and wherein the bend in the input optical fiber (202) and the bend in the output optical fiber (204) direct the alignment beam of light (118) into the output optical fiber (204); and
a detector (128) for receiving the alignment beam of light (118) from the output optical fiber (204) and for generating a signal representative of the alignment beam of light (118), wherein the signal representative of the alignment beam of light (118) is used to determine the alignment of the first support device (412) and the second support device (414).

5. The optical switch (400) of claim 4, further comprising a controller (130) for receiving the signal representative of the alignment beam of light (118) and for generating a first correction signal representative of an first adjustment for all of the support devices in the first plurality of support devices (402), wherein the first correction signal is transmitted to each support device in the first plurality of support devices (402) to cause each support device to adjust a bend in a corresponding optical fiber.

6. The optical switch (400) of claim 5, wherein the controller (130) generates a second correction signal representative of a second adjustment for all of the support devices in the second plurality of support devices (404), wherein the second correction signal is transmitted to each support device in the second plurality of support devices (404) to cause each support device to adjust a bend in a corresponding optical fiber.

7. A method for aligning directing elements in an optical switch, comprising the steps of:
transmitting at least one alignment beam of light (118) through free space between corresponding dedicated optical fibers in a first bundle (102) and a second bundle (104) utilizing corresponding dedicated directing elements to direct the at least one alignment beam of light (118);
transmitting a plurality of data information beams of light (122) through free space between corresponding optical fibers in the first bundle (102) and the second bundle (104) utilizing a plurality of directing elements to direct the data information beams of light (122);
detecting a loss in optical power in the at least one alignment beam of light (118);
generating a first correction signal representative of a first adjustment for all of the directing elements that direct alignment (118) and data information (122) beams of light propagating through the first bundle (102) based on the loss in optical power in the at least one alignment beam of light (118); and
controlling all of the directing elements that direct alignment (118) and data information (122) beams of light propagating through the first bundle (102) with the first correction signal.

8. The method of claim 7, further comprising the steps of:
generating a second correction signal representative of a second adjustment for all of the directing elements that direct corresponding alignment (118) and data information (122) beams of light propagating through the second bundle (104) based on the loss in optical power in the at least one alignment beam of light (118); and
controlling all of the directing elements that direct corresponding alignment (118) and data information (122) beams of light propagating through the second bundle (104) with the second correction signal.

9. The method of claim 7 or 8, wherein the dedicated directing elements comprise dedicated tilting mirrors (206, 208) and the plurality of directing elements comprise a plurality of tilting mirrors (112, 114).

10. The method of claim 7 or 8, wherein the dedicated directing elements comprise dedicated support devices (412, 414) and the plurality of directing elements comprise a plurality of support devices (402, 404).
